⑲ 〕〕〕 Europäisches Patentamt

European Patent Office

Office européen des brevets

(11) Numéro de publication : **0 198 751**
**B1**

(12) **FASCICULE DE BREVET EUROPÉEN**

(45) Date de publication du fascicule du brevet :
26.04.89

(21) Numéro de dépôt : 86400656.4

(22) Date de dépôt : 26.03.86

(51) Int. Cl.⁴ : **F 02 C   9/28**, F 02 C   9/00

(54) Système pour l'alimentation d'un moteur d'aéronef en carburant.

(30) Priorité : 03.04.85 FR 8505077

(43) Date de publication de la demande :
22.10.86 Bulletin 86/43

(45) Mention de la délivrance du brevet :
26.04.89 Bulletin 89/17

(84) Etats contractants désignés :
BE DE GB IT NL SE

(56) Documents cités :
WO—A—82 /006 87
DE—A— 3 008 000
GB—A— 1 311 841
US—A— 4 468 924

(73) Titulaire : AEROSPATIALE SOCIETE NATIONALE
INDUSTRIELLE
37, Boulevard de Montmorency
F-75781 Paris Cédex 16 (FR)

(72) Inventeur : Cavasa, Victor
6 rue A. Camus
F-31820 Pibrac (FR)
Inventeur : Fontaine, Jean-Marc
23, avenue des Croises
F-31520 Ramonville (FR)

(74) Mandataire : Bonnetat, Christian et al
Cabinet PROPI Conseils 23 rue de Léningrad
F-75008 Paris (FR)

EP 0 198 751 B1

Jouve, 18, rue St-Denis, 75001 Paris, France

## Description

La présente invention concerne un système pour l'alimentation d'un moteur d'aéronef en carburant.

On sait que, pour commander la poussée exercée par un moteur d'aéronef et/ou la vitesse dudit aéronef, on contrôle l'ouverture d'une vanne pilotée, disposée dans la conduite d'alimentation dudit moteur en carburant, de façon à commander le débit de carburant admis dans ledit moteur. Pour actionner une telle vanne, on prévoit une manette des gaz disposée latéralement par rapport au pilote (et/ou du copilote) de l'aéronef et distincte du manche de pilotage. Cette manette des gaz est articulée autour d'un axe horizontal, transversal à l'aéronef, de façon à pouvoir pivoter de l'avant de l'aéronef vers l'arrière de celui-ci et vice-versa. De façon générale, une position de la manette vers l'avant correspond à un régime de moteur plus élevé qu'une position de manette vers l'arrière, de sorte que le pilote pousse la manette des gaz vers l'avant de l'aéronef pour augmenter le régime du moteur et tire cette manette des gaz vers l'arrière dudit aéronef pour réduire ledit régime.

Afin de faire correspondre une position de ladite vanne pilotée à une position de ladite manette des gaz, on prévoit une transmission entre ces deux organes. Dans les systèmes connus, une telle transmission est essentiellement mécanique et est constituée par une tringlerie. Cependant, afin d'éviter d'éventuelles détériorations du moteur, par exemple à cause d'un surrégime ou d'un échauffement excessif, on prévoit, dans ladite transmission, des moyens pour corriger la commande de gaz demandée par la manette. Ces moyens de correction sont essentiellement constitués par un régulateur, par exemple du type hydromécanique et/ou électrique, interposé dans la tringlerie reliant la manette à la vanne. Notamment dans le cas où ledit régulateur est électrique, totalement ou partiellement, on prévoit un résolveur associé à ladite manette et susceptible de délivrer un signal représentatif de la position de celle-ci.

Pour pouvoir effectuer son office, ledit régulateur reçoit, d'une pluralité de capteurs, aussi bien des paramètres internes au moteur (températures, pressions, vitesse de rotation du ou des rotors, etc...), que des paramètres concernant l'environnement de l'aéronef (températures, pressions, altitude, vitesse de l'air environnant, vitesse relative de l'aéronef par rapport à l'air, accélérations de l'aéronef, etc...).

On remarquera que lesdits moyens de correction, étant du type régulateur, peuvent efficacement protéger le moteur en abaissant le régime en cas de nécessité, mais que, en revanche, ils ne peuvent commander une augmentation du régime du moteur, par exemple pour en maintenir la poussée afin de surmonter une surcharge aérodynamique momentanée imposée à l'aéronef par son environnement. Ainsi, dans une telle situation, le pilote est obligé de lâcher d'une main le manche de pilotage pour actionner avec celle-ci la manette des gaz et rétablir la poussée désirée pour le moteur. Le pilote ne peut donc tenir le manche que de son autre main, au moment même où une perturbation extérieure nécessiterait la concentration de tous ses efforts sur la commande dudit manche.

Pour remédier en partie à cet inconvénient du fonctionnement manuel décrit ci-dessus, les systèmes connus comportent un dispositif électronique d'ajustement automatique de poussée pouvant être enclenché en vol de croisière. Ce dispositif reçoit au moins certains desdits paramètres internes et externes du moteur, ainsi que le signal du résolveur associé à ladite manette, et délivre un signal représentatif d'une poussée de consigne. Ce dispositif reçoit de plus des informations sur la poussée maximale limite à ne pas dépasser, par l'intermédiaire d'un sélecteur agencé à la disposition de l'équipage et permettant, en fonction des circonstances, de choisir entre plusieurs valeurs de poussée maximale limite.

Dans les systèmes connus, on prévoit de plus un dispositif de motorisation, accouplé à ladite manette et commandé par le signal délivré par le dispositif électronique d'ajustement automatique de poussée. Ainsi, en fonction de ce dernier signal, le dispositif de motorisation déplace ladite manette, qui, à son tour, par l'intermédiaire de la tringlerie et du régulateur, actionne ladite vanne pilotée.

On voit ainsi que les systèmes connus pour l'alimentation d'un moteur d'aéronef en carburant présentent de nombreux inconvénients :

- en fonctionnement manuel, pour chaque position de la manette, ils ne peuvent que limiter le régime du moteur et sont incapables de commander une augmentation de ce régime, par exemple pour maintenir la poussée constante ;

- le fonctionnement automatique, qui n'intervient qu'en vol de croisière, nécessite un dispositif de motorisation pour la manette des gaz ;

- en fonctionnement automatique, la manette des gaz est constamment en mouvement sous l'action dudit dispositif de motorisation ;

- ils nécessitent un sélecteur de valeurs de poussée maximale limite, distinct de la manette des gaz, de sorte que la charge de travail de l'équipage est relativement lourde et que la définition des organes de commande du moteur installés dans le poste de pilotage est complexe ;

- au décollage, en fonctionnement manuel, la position de la manette des gaz n'est pas toujours la même, puisque la poussée à exercer au décollage est fonction de la charge de l'aéronef et que, en conséquence, cette position dépend de ladite charge : la charge de travail de l'équipage est donc accrue puisque la bonne position doit être déterminée à chaque décollage.

La présente invention a pour objet de remédier à ces inconvénients. Elle concerne un système pour l'alimentation d'un moteur d'aéronef en carburant, de structure très différente de celle des systèmes connus et permettant :

- en fonctionnement manuel, pour chaque position de la manette, une certaine variation automatique de la poussée, aussi bien à l'augmentation qu'à la diminution, à l'intérieur d'une plage prédéterminée ;
- la suppression du dispositif de motorisation de la manette des gaz ;
- la fixité de la position de la manette des gaz aussi bien en fonctionnement automatique qu'en fonctionnement manuel
- la suppression d'un sélecteur de valeurs de poussée maximale limite, distinct de la manette de gaz ;
- l'unicité de la position de la manette des gaz au décollage, quelle que soit la charge de l'aéronef.

A ces fins, selon l'invention, le système pour l'alimentation d'un moteur d'aéronef en carburant, du type comprenant :

- une vanne pilotée, commandant le débit de carburant admis dans ledit moteur ;
- une manette, mobile dans deux sens opposés le long d'une course délimitée par deux positions extrêmes, ladite manette étant associée à un résolveur susceptible de délivrer un signal continu représentatif de la position de ladite manette ;
- une transmission agencée entre ladite manette et ladite vanne pilotée, pour faire correspondre une position de ladite vanne a une position de ladite manette, ladite transmission comportant un dispositif de correction qui, d'une part, reçoit une pluralité de paramètres concernant aussi bien le fonctionnement du moteur que l'environnement dudit aéronef, ainsi que le signal du résolveur, et, d'autre part, est susceptible de corriger la commande de ladite vanne par ladite manette pour tenir compte desdits paramètres ;
- un dispositif électronique d'ajustement de poussée recevant au moins certains desdits paramètres et le signal du résolveur, et délivrant un signal représentatif d'une poussée de consigne ; et,
- des moyens de commutation permettant de commander ladite vanne pilotée ;
- soit par actionnement manuel volontaire de ladite manette ;
- soit, pour au moins le vol de croisière de l'aéronef, automatiquement par l'intermédiaire dudit dispositif électronique d'ajustement de poussée, est remarquable en ce que :
- ledit dispositif de correction est entièrement électrique et commande ladite vanne par l'intermédiaire de son signal de sortie ;
- la connexion électrique entre ledit résolveur et ledit dispositif de correction est l'unique liaison entre ladite manette et ledit dispositif de correction ;
- ledit dispositif de correction comporte :

a) des premiers moyens pour allouer au signal dudit résolveur une pluralité de plages consécutives de valeurs ;

b) des seconds moyens pour transformer chacune desdites plages de valeurs du signal du résolveur en une plage de valeurs élémentaire pour le signal de commande de vanne, plage de valeurs élémentaire qui est caractéristique d'une phase de pilotage dudit aéronef et dont les extrémités, sauf éventuellement pour celui de ces signaux élémentaires de commande de vanne qui correspond au ralenti du moteur, constituent l'une la valeur maximale et l'autre la valeur minimale dudit signal élémentaire correspondant, le signal de sortie dudit dispositif de correction étant constitué par la juxtaposition desdits signaux élémentaires de commande de vanne, de sorte que,

- d'une part, est établie une loi qui, à chaque position de la manette, fait correspondre une poussée pour le moteur, et
- d'autre part, la course de ladite manette est subdivisée en une pluralité de zones consécutives dont chacune d'elles est associée à une phase de pilotage, et correspond à une plage de poussée pour ledit moteur, les extrémités de chaque zone correspondant l'une à la valeur maximale et l'autre à la valeur minimale de la poussée dans la plage correspondante ; et

c) des troisièmes moyens qui, lorsque le dispositif électronique d'ajustement de poussée est hors circuit par action desdits moyens de commutation, font varier automatiquement, lorsque ladite manette se trouve à l'intérieur d'une telle zone et en fonction desdits paramètres, la poussée à l'intérieur de la plage correspondante, la variation de poussée s'effectuant, à partir de la valeur Px correspondant à la position de la manette, aussi bien vers ladite valeur maximale que vers la valeur minimale de ladite plage de façon à maintenir la poussée à ladite valeur Px , lesdites valeurs maximale et minimale constituant des limites infranchissables.

On voit ainsi que, grâce au système selon l'invention, on a supprimé la motorisation de la manette des gaz et que, en conséquence, cette manette reste en position fixe, même en fonctionnement automatique lorsqu'elle est sous les ordres du dispositif électronique d'ajustement de poussée.

En fonctionnement manuel, le pilote choisit une zone de la course de la manette et y amène cette dernière. Il en résulte donc l'affichage d'une poussée pour le moteur. Si, pour des raisons internes ou externes au moteur, cette poussée subit une augmentation ou une réduction, ledit dispositif de correction commande une réduction ou une augmentation, respectivement, dans les limites de ladite plage de poussée correspondante, pour corriger la variation détectée à partir de certains desdits paramètres. Dans ces conditions, la manette associée audit dispositif de correction joue le rôle de sélecteur de modes de poussées limites et, à l'intérieur d'un mode, de moyens de modulation du niveau de la poussée.

En revanche, en fonctionnement automatique, ladite manette ne sert que de sélecteur de mode de poussées limites, la modulation du niveau de

poussée étant alors obtenue par l'action du dispositif électronique d'ajustement de poussée. Cependant, la modulation de poussée ne passe pas par la position de ladite manette, comme cela était le cas dans les systèmes de la technique antérieure.

De préférence, ledit dispositif de correction et ledit dispositif électronique d'ajustement de poussée sont du type calculateur électronique. Ils peuvent être constitués d'un même calculateur. Dans le cas où ils sont constitués de deux unités de calcul distinctes, il va de soi qu'ils sont couplés pour dialoguer.

Lesdits premiers, seconds et troisièmes moyens peuvent être formés par des circuits faisant partie intégrante dudit calculateur électronique. Cependant, éventuellement, au moins lesdits premiers et seconds moyens peuvent constituer un circuit d'entrée pour ledit calculateur électronique, qui incorpore alors lesdits troisièmes moyens. Dans ce cas, lesdits premiers moyens peuvent être formés par des circuits à seuils, alors que lesdits seconds moyens peuvent être constitués par des circuits de transfert, chaque paire d'un circuit à seuils et d'un circuit de transfert correspondant à un tronçon du signal du résolveur, c'est-à-dire à une plage de poussée.

Avantageusement, à la manette est associé un dispositif mécanique permettant de marquer le passage de ladite manette d'une zone à l'autre.

La loi qui, à chaque position de la manette, fait correspondre une poussée pour le moteur peut être constituée de portions rectilignes. Elle comporte, lorsque la manette se déplace depuis la position correspondant à la poussée maximale possible pour le moteur jusqu'à la position correspondant à la poussée correspondant au ralenti, au moins deux portions différentes, dont l'une correspond à une plage de poussée destinée au décollage et l'autre à une plage de poussée destinée au vol de croisière. La portion correspondant au décollage concerne les poussées les plus élevées et présente une pente inférieure à celle de la portion relative au vol de croisière. Ladite portion correspondant au décollage peut être elle-même subdivisée en deux plages de poussée distinctes, dont l'une supérieure correspond au décollage à pleine charge et l'autre au décollage à charge réduite ou aux poussées maximales susceptibles d'être exercées en continu.

Lorsque, de façon connue, un inverseur de poussée est associé audit moteur, ladite loi peut comporter de plus une portion spécifique au soufflage dudit inverseur en position active et correspondant à une zone d'inversion de poussée. De préférence, cette portion spécifique est disposée, par rapport à la poussée correspondant au ralenti, du côté opposé auxdites portions correspondent au décollage et au vol de croisière et sa pente est de signe opposé à celle desdites portions, de sorte que, dans la plage de poussée à laquelle elle correspond, les poussées croissent lorsque la manette s'éloigne de ladite poussée de ralenti, c'est-à-dire lorsque cette manette se déplace au-delà dudit ralenti dans le même sens que celui pour lequel, en-deçà dudit ralenti, elle fait passer à poussée décroissante de la poussée maximale au ralenti.

Il est alors avantageux de prévoir, pour ladite loi, une portion de ralenti, le passage en inversion de poussée s'effectuant à l'intérieur de ladite portion de ralenti. De préférence, à ladite manette est associée une butée escamotable sur laquelle il est nécessaire d'agir de façon volontaire pour pouvoir franchir ladite portion de ralenti en direction de la portion d'inversion de poussée.

En revanche, ladite butée escamotable est prévue pour ne pas s'opposer au franchissement, par la poignée, de ladite portion de ralenti, de la portion d'inversion de poussée en direction de la portion de vol de croisière.

Avantageusement, afin de pouvoir régler avec précision la poussée de décollage a charge réduite (afin d'économiser du carburant) après avoir amené ladite manette dans la zone correspondante, on prévoit des moyens de réglage susceptibles de modifier le paramètre de température ambiante au sol. En effet, on sait que la poussée au décollage doit être d'autant plus grande que la température au sol est plus élevée et vice-versa. Par suite, en réduisant volontairement le paramètre de température ambiante, on agit dans le même sens qu'une réduction de charge de l'aéronef, alors qu'en augmentant ce paramètre tout se passe comme si ladite charge était plus grande.

Bien entendu, quoique ci-dessus et ci-après, on ne prévoit qu'un seul moteur commandé par le système conforme à l'invention, il va de soi que celui-ci peut être prévu pour contrôler l'alimentation de plusieurs moteurs.

Les figures du dessin annexé feront bien comprendre comment l'invention peut être réalisée. Sur ces figures, des références identiques désignent des éléments semblables.

La figure 1 illustre schématiquement un système connu pour l'alimentation d'un moteur d'aéronef en carburant.

La figure 2 illustre schématiquement un mode de réalisation du système conforme à l'invention, destiné à l'alimentation d'un moteur d'aéronef en carburant.

La figure 3 montre un mode de réalisation de l'ensemble manette des gaz-résolveur, du système de la figure 2.

Les figures 4 et 5 illustrent schématiquement le fonctionnement du système selon l'invention, la figure 4 montant le signal du résolveur en fonction de la course de la manette des gaz, tandis que la figure 5 représente le signal de commande de vanne et la poussée du moteur en fonction de ladite course.

La figure 6 donne le schéma d'un exemple de réalisation d'un circuit d'entrée pour le calculateur électronique commandant la vanne.

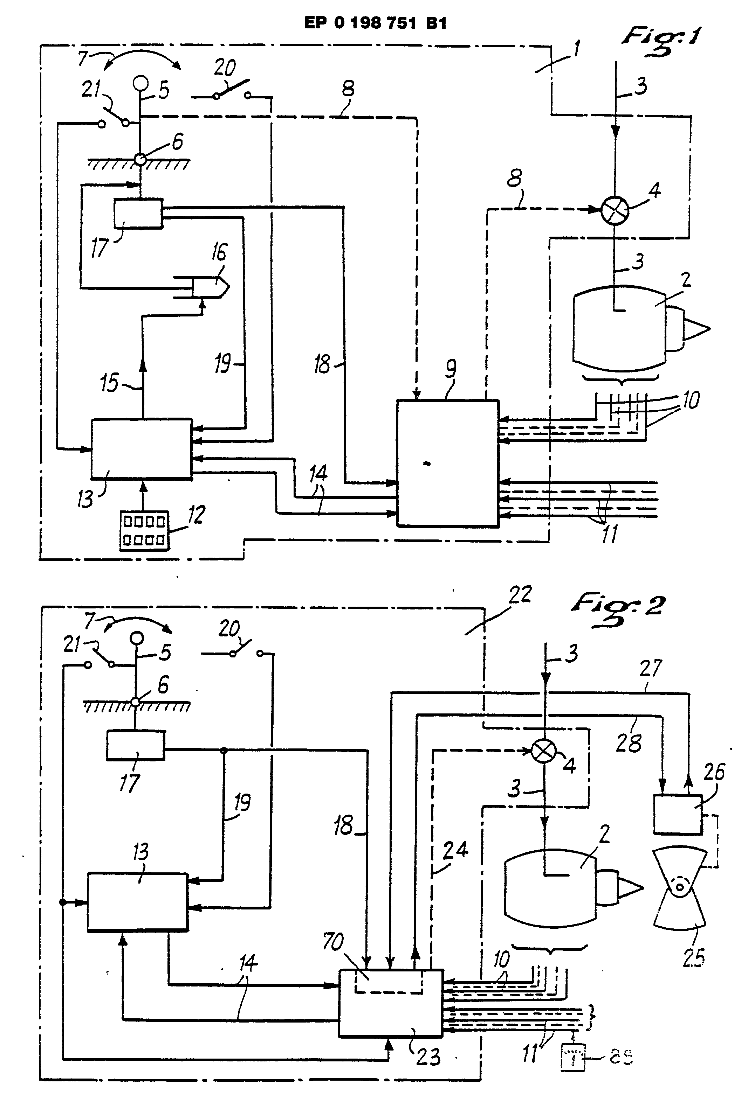

Le système 1 de type connu, illustré par le schéma synoptique de la figure 1, est destiné à alimenter en carburant un moteur 2, par exemple un turbo-réacteur d'aéronef. Le carburant, contenu dans un réservoir non représenté, est amené au moteur 2 par l'intermédiaire d'une conduite 3, sur laquelle est montée une vanne commandable 4, contrôlant le débit du carburant fourni audit moteur 2.

Ce système connu 1 comporte une manette 5 susceptible de pivoter autour d'un axe fixe 6, ce qui est illustré par la double flèche 7. Sur la figure 1, on a supposé que l'axe fixe 6 était orthogonal au plan du dessin ; dans un aéronef, de façon usuelle, ledit axe fixe 6 est transversal, c'est-à-dire orthogonal à l'axe longitudinal de l'aéronef.

La manette 5 est reliée à la vanne commandable 4 par l'intermédiaire d'une transmission comprenant une liaison mécanique 8 et un régulateur 9. La liaison mécanique 8 passe par l'intermédiaire dudit régulateur 9 de façon que l'ordre de commande représenté par un déplacement de la manette 5 puisse être corrigé en fonction des possibilités réelles de fonctionnement du moteur 2. Pour cela, le régulateur 9, qui, de façon usuelle, comporte un régulateur hydromécanique et un superviseur électronique, reçoit de détecteurs (non représentés), d'une part, par les lignes 10, une pluralité de paramètres internes au moteur 2, tels que températures des flux gazeux et des aubes des turbines, pressions gazeuses, vitesses de rotation des rotors, etc...et d'autre part, par des lignes 11, une pluralité de paramètres externes au moteur 2, tels que par exemple, hygrométrie de l'air, température au sol, vitesse de l'air autour de l'aéronef, vitesse relative de l'aéronef par rapport à l'air, accélération de l'aéronef, etc...

On comprendra donc aisément que le pilote (ou le copilote) de l'aéronef, en faisant pivoter la manette 5 autour de son axe 6 (flèche 7), grâce à la liaison mécanique 8, ouvre plus ou moins la vanne 4 et commande donc le régime du moteur 2. Un tel actionnement manuel direct fait correspondre une alimentation du moteur en carburant à une position de la manette 5, avec toutefois une pondération introduite par le régulateur 9, en fonction de la valeur des paramètres internes et externes reçus par les lignes 10 et 11.

Par ailleurs, le système connu de la figure comporte un sélecteur 12 de modes de fonctionnement pour le moteur 2, au moins pour certaines phases de pilotage de l'aéronef, ainsi qu'un dispositif électronique d'ajustement automatique de poussée 13 en liaison avec ledit sélecteur 12. Le dispositif 13 peut dialoguer avec le régulateur 9 par une ligne 14 et, notamment, reçoit de celui-ci les paramètres internes et externes au moteur 2, véhiculés par les lignes 10 et 11. En fonction des informations reçues des lignes 10 et 11, d'une part, et du sélecteur de modes 12, d'autre part, le dispositif 13 détermine une poussée instantanée de consigne pour ledit moteur. Cette poussée de consigne apparaît sur une ligne 15 reliée à la manette 5 par l'intermédiaire d'un dispositif de motorisation 16 (par exemple un vérin). Un résolveur 17, rigidement lié à la manette 5, délivre un signal représentatif de la position de ladite manette 5, ce signal étant adressé au régulateur 9 et au dispositif 13, respectivement par des lignes 18 et 19.

La mise en circuit ou hors circuit du dispositif électronique 13 est commandée par un commutateur 20. Un autre commutateur 21, porté par la manette 5, permet éventuellement de commander en urgence, de façon prioritaire, la mise hors circuit du dispositif électronique 13.

De façon connue, le sélecteur 12, permet de choisir différents modes de fonctionnement en automatique du moteur 2. Par exemple, le sélecteur 18 permet :

- soit d'ajuster en continu la poussée du moteur 2 pour maintenir constante la vitesse de l'aéronef ;
- soit d'asservir la poussée du moteur 2 à une valeur limite ;
- soit de réduire le régime du moteur 2 pendant les phases de descente ou de changement d'altitude de l'aéronef ; etc..

Ainsi, lorsque le pilote ou le copilote servant le système connu 1 veut passer de la commande manuelle décrite ci-dessus à la commande automatique par l'intermédiaire du sélecteur 12, il agit sur le commutateur 20, après avoir choisi un mode de fonctionnement automatique sur ledit sélecteur 12. Le dispositif électronique 13 émet à sa sortie 15 un signal qui commande le dispositif de motorisation 16 ; celui-ci, de façon correspondante, agit sur la manette 5, à travers le résolveur 17, pour la faire pivoter de façon appropriée. Ce pivotement de la manette 5 entraîne alors la commande de la vanne 4, par l'intermédiaire de la liaison mécanique 8 et du régulateur 9.

En commande automatique, le dispositif électronique 13 remplace donc la main du pilote ou du copilote pour déplacer la manette 5 et agir sur la vanne 4.

Lorsque l'on désire passer de la commande automatique à la commande manuelle, il suffit d'actionner le commutateur 20, ou bien, en cas d'urgence, le commutateur 21.

On voit ainsi que dans le système connu de la figure 1, non seulement la correction introduite par le régulateur 9 ne peut être que dans le sens de la fermeture de la vanne 4, mais encore la commande automatique passe systématiquement par la position de la manette 5, ce qui nécessite la motorisation 16. De plus, on doit prévoir un sélecteur de modes de fonctionnement du moteur indépendant de la commande normale des gaz.

Comme le montre schématiquement la figure 2, la présente invention permet de remédier à ces inconvénients.

Dans le mode de réalisation schématique 22 de l'invention montré par cette figure 2, on retrouve les éléments 2 à 7, 10, 11, 13, 14, et 17 à 21. En revanche, la liaison mécanique 8 a été supprimée et le régulateur 9 a été remplacé par un calculateur électronique 23. De même, le sélecteur de modes de fonctionnement 12 a été supprimé, ainsi que la sortie 15 et la motorisation 16.

Le calculateur électronique 23 reçoit les différents paramètres véhiculés par les lignes 10 et 11, ainsi que le signal de sortie du résolveur 17 par la ligne 18 et dialogue par la ligne 14 avec le dispositif d'ajustement automatique de poussée 13, qui se présente alors avantageusement sous la forme d'un calculateur électronique. De plus, le calculateur électronique 23 est susceptible de commander la vanne 4 grâce à la liaison électrique 24.

A chaque instant, le calculateur 23 connaît la position de la manette 5, grâce au résolveur 17 et à la liaison 18 et il peut commander en conséquence la vanne 4.

En fonctionnement manuel, la vanne 4 est commandée à partir de la manette 5 par l'intermédiaire du résolveur 17, de la liaison 18, du calculateur 23 et de la liaison 24.

En revanche, en fonctionnement d'ajustement automatique de poussée, la vanne 4 est commandée, sur demande du calculateur 13 à travers la liaison 14, par le calculateur 23 par l'intermédiaire de la liaison 24. On évite ainsi la motorisation 16.

Par ailleurs, selon l'invention, comme on le comprendra bien de la suite de la description, la lecture en continu de la position de la manette 5 permet au calculateur 23 :
- de sélectionner le mode de poussée limite ;
- d'activer la fonction d'ajustement automatique de la poussée.

En effet, selon l'invention, la sélection des modes de poussée limite est faite par le calculateur 23 à partir de la lecture en continu du signal du resolveur 17, c'est-à-dire de la position de la manette 5. Le calculateur 23 identifie un intervalle de position dans lequel se trouve ladite manette 5, sélectionne un mode de poussée limite associé et, soit module directement la poussée réelle du moteur à l'intérieur dudit mode, soit adresse celui-ci au calculateur 13 d'ajustement automatique de la poussée, dans le cas ou ladite position correspond à une zone possible de fonctionnement en automatique et où les commutateurs 20 et 21 sont dans la position appropriée.

Lorsque, comme cela est usuel, le moteur 2 est associé à un inverseur de poussée 25 actionné par une commande 26, on prévoit une ligne d'activation 28 et une ligne de confirmation d'activation 27 entre la commande 26 et le calculateur 23 (voir la figure 2).

Selon une particularité importante de la présente invention, la course de la manette 5 autour de son axe de pivotement 6 est subdivisée, matériellement ou au moins fictivement, en une pluralité de zones, à chacune desquelles le calculateur 23 fait correspondre une fonction représentant la poussée du moteur 2 en fonction de la position de la manette 5.

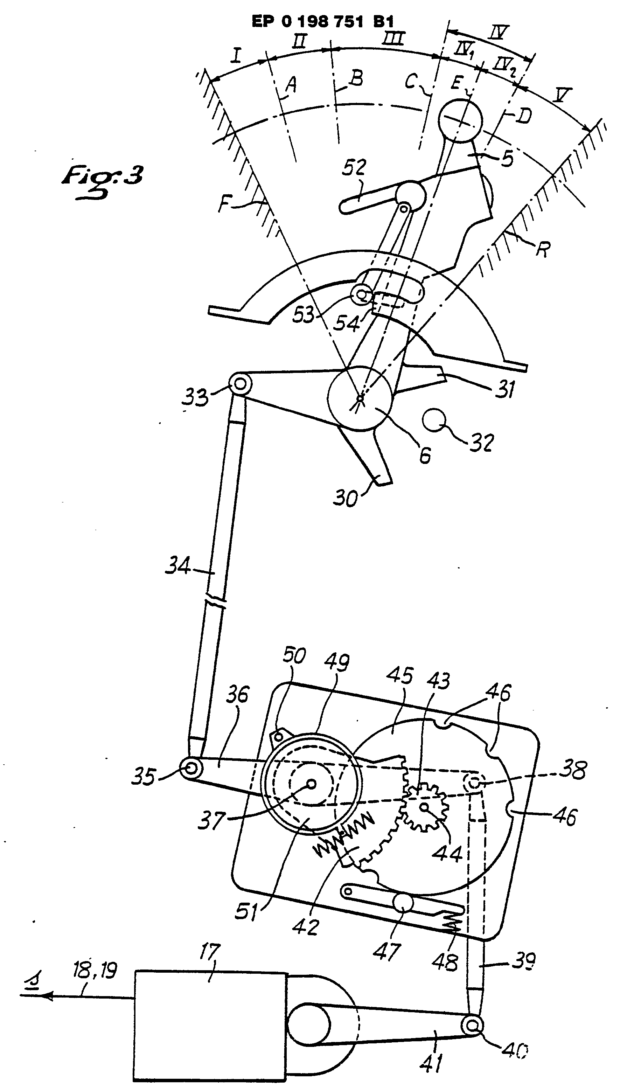

Dans le mode de réalisation de la figure 3, la manette 5 comporte deux butées 30 et 31, susceptibles de coopérer avec un taquet fixe 32 : lorsque la manette 5 est poussée au maximum vers l'avant de l'aéronef, elle occupe sa position extrême avant F délimitée par la coopération de la butée 30 avec le taquet fixe 32, tandis que lorsque ladite manette 5 est tirée au maximum vers l'arrière de l'aéronef, elle occupe sa position extrême arrière R délimitée par la coopération de la butée 31 avec ledit taquet 32.

La poignée 5 est articulée en 33 sur une bielle 34, elle-même articulée en 35 sur un levier 36 susceptible de pivoter autour d'un axe fixe 37. A son extrémité libre 38, le levier 36 est articulé sur une bielle 39, articulée en 40 sur l'organe de commande 41 du résolveur 17.

Par ailleurs, le levier 36 est solidaire en rotation autour de l'axe fixe 37 d'un secteur denté 42, engrènant avec un pignon 43, susceptible de tourner autour d'un axe fixe 44. Sur l'axe fixe 44 est calé un disque 45 comportant des encoches 46 à sa périphérie. Un taquet mobile 47 est pressé par un ressort 48 contre la périphérie du disque 45, de sorte qu'au passage d'une encoche 46, il en résulte un léger point dur.

Ainsi, grâce à la coopération des encoches 46 et du taquet mobile 47, la course de la manette 5 entre ses positions extrêmes F et R peut être subdivisée en zones consécutives I, II, III, IV et V, chacune des positions limites A, B, C et D entre lesdites zones étant déterminée par une encoche 46.

Afin de produire une sensation d'effort au cours de l'actionnement de la manette 5, on peut prévoir un collier de serrage 49, ancré en un point fixe 50 et enserrant un bossage cylindrique 51 solidaire en rotation du levier 36 et coaxial à l'axe 37.

La manette 5 porte de plus une gâchette de sécurité 52 solidaire d'un taquet 53, susceptible de venir en appui contre une butée fixe 54, subdivisant la zone IV en deux zones IV1 et IV2, lorsque la manette vient occuper une position E dans sa course de la position F vers la position R. Une action volontaire sur la gâchette 52, par exemple un soulèvement, permet d'éviter la butée fixe 54 et de continuer la course de la manette 5 en direction de la position R. En revanche, de la position R vers la position F, le taquet 53 échappe spontanément à la butée fixe 54.

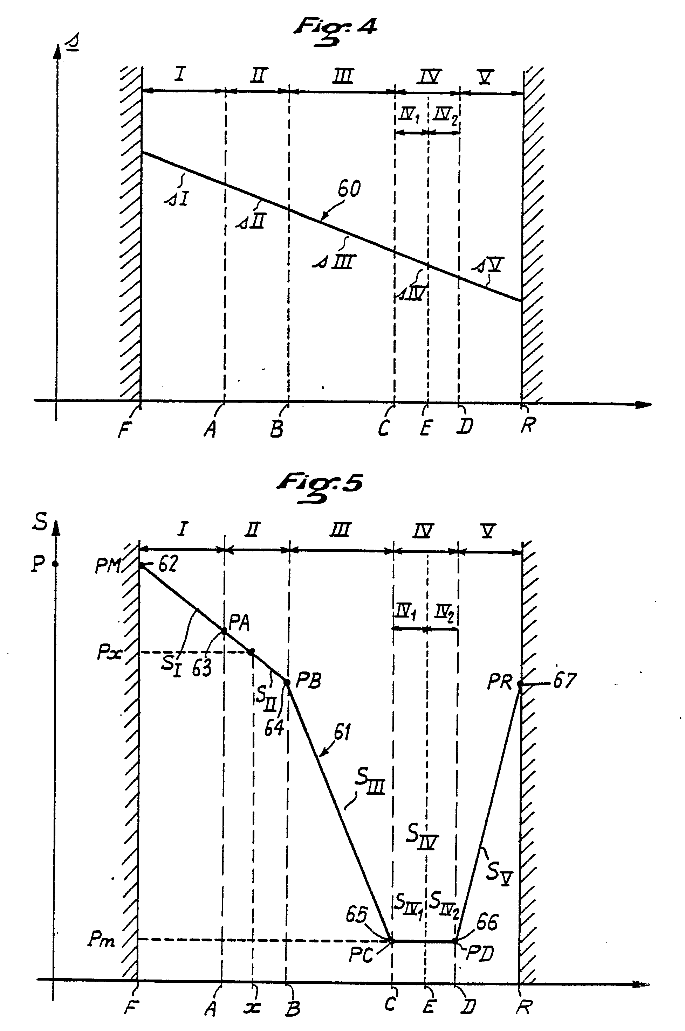

Sur la figure 4, on a représenté, en fonction de la position de la manette 5 le long de sa course F-R, la courbe 60 représentant la variation du signal électrique s apparaissant sur la sortie 18, 19 du résolveur 17. Ce signal s est par exemple une fonction linéaire de la position de la manette 5 et à chaque zone I à V de la course de celle-ci correspond un tronçon sI à sV du signal s.

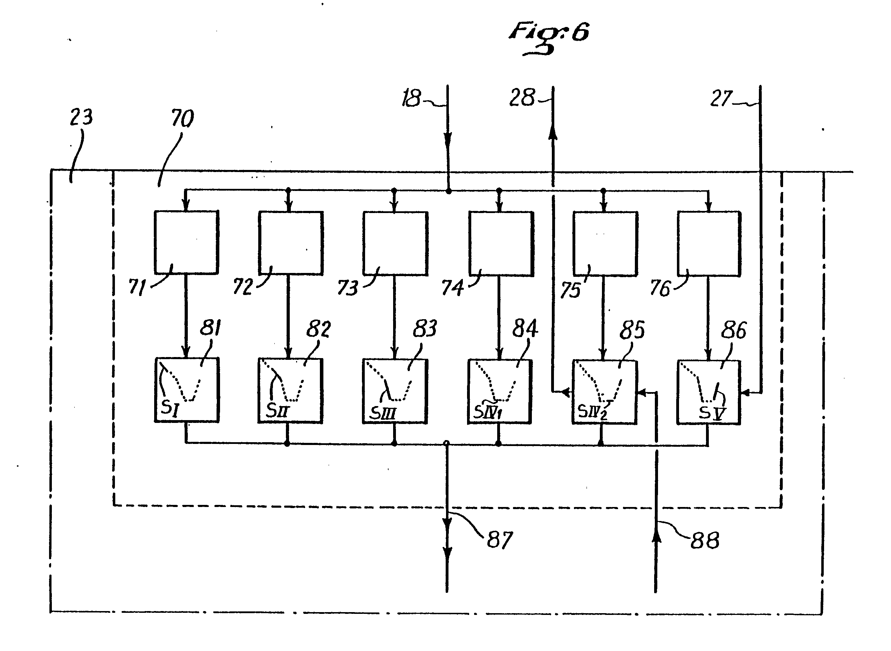

Le signal s est transmis au calculateur 23, qui détecte les passages A à D entre les tronçons sI à sV et transforme le signal s dans le signal S représenté par la courbe 61 de la figure 5, en fonction de la position de la manette 5.

Comme on peut le voir, le signal S engendré par le calculateur 23, est par exemple constitué de portions de droites successives SI, SII, SIII, SIV et SV de pentes différentes dont chacune d'elles correspond à un tronçon sI à sV du signal s. Le signal S représenté par la courbe 61 de la figure 5 :
- les portions rectilignes SI et SII, séparées par la position A, sont sensiblement alignées et présentent une pente négative de l'ordre de 45° ;
- la portion SIII, séparée de la portion SII par la position B, présente une pente négative, plus accentuée que celle des portions SI et SII ;

- la portion SIV séparée de la portion SIII par la position C, constitue un palier et est subdivisée en deux portions SIV1 et SIV2 par la position E ;

- la portion SV fait suite à la portion SIV, au-delà de la position D et présente une forte pente positive.

Le calculateur 23 commande, par la liaison électrique 24, la vanne 4 de façon que l'ouverture de celle-ci soit proportionnelle à l'amplitude du signal S, c'est-à-dire à l'amplitude de chaque signal élémentaire SI à SV ; on voit ainsi que la poussée P du moteur 2, de la position F vers la position R, décroît de la valeur maximale PM (pour la position F) à la valeur minimale Pm (entre C et D) en passant par les valeurs successivement décroissantes intermédiaires PA et PB (respectivement en A et B), puis croît de la valeur minimale Pm (pour la position D) à la valeur PR (pour la position R).

Ainsi, à chaque zone I à V de la course de la manette 5 est associée une plage de poussée, respectivement PM-PA, PA-PB, PB-PC, PC-PD et PD-PR pour le moteur 2.

En fonctionnement manuel du système selon l'invention, le pilote (ou le copilote) amène la manette 5 dans une des zones I à V, à la position x (voir la figure 5). Il en résulte donc une poussée Px pour le moteur 2. En fonction de la valeur de paramètres reçus par les lignes 10 et 11, le calculateur 23 fera varier la commande du moteur 2 à l'intérieur de la plage de poussée correspondante (la zone II dans l'exemple de la figure 5), entre les poussées maximale et minimale de ladite plage (PA et PB dans ledit exemple), afin de maintenir la poussée Px manuellement affichée.

Donc, grâce à l'invention, la poussée du moteur 2 subit non seulement une régulation, mais une véritable modulation entre deux poussées limites choisies en fonction d'une position à laquelle on amène la manette 5.

Par suite, lorsque la manette 5 est amenée manuellement dans :

- la zone I, la poussée exercée par le moteur 2 est la plus grande possible et est modulée automatiquement entre la valeur maximale PM et la valeur PA ; cette zone est utilisée par exemple pour les décollages à pleine charge ou lors d'une remise des gaz ;

- la zone II, ladite poussée reste importante et est modulée automatiquement entre les valeurs PA et PB ; cette zone est utilisée par exemple pour les décollages à charge réduite (économie de carburant) ou lorsqu'un moteur doit fonctionner en continu à poussée élevée, par exemple pour compenser la panne d'une autre moteur ;

- la zone III, ladite poussée peut être largement modulée entre la poussée PB et la poussée minimale (ou de ralenti) Pm ; cette zone est particulièrement destinée au vol de croisière ;

- la zone IV1, le moteur 2 exerce sa poussée minimale de poussée avant Pm, quelle que soit la position de la manette 5 dans cette zone ;

- la zone IV2, le moteur 2 exerce sa poussée minimale de poussée inverse Pm, quelle que soit la position de la manette 5 dans cette zone ; et,

- la zone V, la poussée est largement modulable entre la poussée minimale inverse Pm et la poussée maximale inverse PR ; cette zone est utilisée pour le soufflage de l'inverseur de poussée 26.

Dans le palier IV, le passage de la zone IV1 vers la zone IV2 (c'est-à-dire de la poussée directe vers la poussée inverse) ne peut se faire que par actionnement volontaire de la butée escamotable 53, lorsque la manette 5 atteint la position E.

On voit donc que, par action du calculateur électronique 23, le fonctionnement manuel du système selon l'invention est fortement automatisé.

Le fonctionnement automatique du système selon l'invention n'est prévu que pour certaines zones, par exemple la zone III de vol en croisière. Dans ce cas, lorsque le calculateur électronique 23 détecte, à la fois, que la manette 5 est dans la zone III et que le système de commutateurs 20, 21 est dans la position adéquate, il commande le calculateur électronique 13, pour que celui-ci commande la vanne 4, par son intermédiaire et celui de la liaison électrique 24. Le calculateur 13 permet ainsi à la poussée du moteur 2 et/ou à la vitesse de l'aéronef d'être asservies à toutes valeurs cibles (comprises dans la plage PB-Pm mais indépendamment de la position de la manette 5 dans la zone III) ou à toutes variations de valeur cible préprogrammées.

Comme on l'a vu ci-dessus, le calculateur électronique 23 effectue, en fonction manuelle, trois fonctions :

— il subdivise le signal s dudit résolveur 17 en une pluralité de tronçons consécutifs sI, sII, sIII, sIV et sV ;

— il transforme chacun desdits tronçons sI à sV du signal s du résolveur 17 en un signal élémentaire SI, SII, SIII, SIV ou SV respectivement de commande de vanne, qui est caractéristique d'une phase de pilotage dudit aéronef et dont les extrémités 62 et 63, 63 et 64, 64 et 65, 65 et 66, 66 et 67, sauf éventuellement pour celui SIV de ces signaux élémentaires de commande de vanne qui correspond au ralenti du moteur 2, constituent l'une la valeur maximale et l'autre la valeur minimale dudit signal élémentaire correspondant, le signal de sortie s dudit dispositif de correction 23 étant constitué par la juxtaposition desdits signaux élémentaires de commande de vanne, de sorte que,

— d'une part, est établie une loi 61 qui, à chaque position de la manette 5, fait correspondre une poussée P pour le moteur 2 ; et,

— d'autre part, la course F-R de ladite manette est subdivisée en une pluralité de zones consécutives I à V dont chacune d'elles est associée à une phase de pilotage et correspond à une plage de poussée (PM-PA, PA-PB, PB-PC, PC-PD,PD-PR) pour ledit moteur 2, les extrémités F, A, B, C, D et R de chaque zone correspondant l'une à la valeur maximale et l'autre à la valeur minimale de la poussée P dans la plage correspondante ;

— il fait varier, lorsque le dispositif électronique d'ajustement de poussée 13 est hors circuit par action desdits moyens de commutation 20, 21, et lorsque ladite manette 5 se trouve à l'intérieur d'une telle zone I à V et en fonction desdits paramètres 10, 11, la poussée P à l'intérieur de la plage correspondante, la variation de poussée s'effectuant, à partir de la valeur Px correspondant à la position x de la manette 5, aussi bien vers la valeur maximale que vers la valeur minimale de ladite plage, lesdites valeurs maximale et minimale constituant alors des limites infranchissables. Ces fonctions peuvent être obtenues par programmation. Elles peuvent également être au moins partiellement réalisées par des circuits associés audit calculateur électronique 23. Par exemple, sur la figure 6, on a représenté un circuit d'entrée 70 susceptible d'effectuer les deux premières fonctions mentionnées ci-dessus.

Le circuit d'entrée 70 comporte six circuits à seuils 71 à 76, chacun susceptible de détecter un tronçon sI, sII, sIII, sIV1, sIV2 ou sV du signal s du résolveur 17, par comparaison de ses valeurs de seuil avec l'amplitude du signal s aux extrémités du tronçon correspondant, ainsi que six circuits de transfert 81 à 86 susceptibles, à partir de chacun desdits tronçons du signal s, d'engendrer respectivement les tronçons SI, SII, SIII, SIV1, SIV2 et SV du signal S. Le signal S est adressé au calculateur électronique 23 par la ligne 87. Celui-ci adresse au circuit d'entrée 70, par la liaison 88, un signal de confirmation de ralenti du moteur 2. De plus, le circuit d'entrée 70 reçoit les signaux véhiculés par les lignes 28 et 27, respectivement représentatifs de la commande et de l'état de l'inverseur 25.

Comme on l'a mentionné ci-dessus, en cas de décollage à charge réduite, on place la manette 5 dans la zone II, correspondant à une gamme de poussée PA-PB élevées, mais inférieures à celles de la zone I. Ainsi, on économise du carburant.

Afin de parfaire l'ajustement de la poussée du réacteur 2 à la charge de l'aéronef au décollage, on peut prévoir un dispositif de réglage 89, interposé sur la ligne 11 de paramètre extérieur correspondant au paramètre de température ambiante. Ainsi, par modification volontaire de cette température ambiante, on fait varier la poussée du moteur 2.

En établissant une corrélation entre la température ambiante et la valeur de la charge au décollage, on introduit ainsi automatiquement celle-ci dans les paramètres pris en compte par le calculateur électronique 23.

## Revendications

1. Système pour l'alimentation d'un moteur (2) d'aéronef en carburant, du type comprenant :

— une vanne pilotée (4), commandant le débit de carburant admis dans ledit moteur (2) ;

— une manette (5), mobile dans deux sens opposés le long d'une course délimitée par deux positions extrêmes (F et R), ladite manette étant associée à un résolveur (17) susceptible de délivrer un signal continu (60) représentatif de la position de ladite manette ;

— une transmission agencée entre ladite manette (5) et ladite vanne pilotée (4), pour faire correspondre une position de ladite vanne à une position de ladite manette, ladite transmission comportant un dispositif de correction (23) qui, d'une part, reçoit une pluralité de paramètres concernant aussi bien le fonctionnement du moteur (2) que l'environnement dudit aéronef (par les lignes 10 et 11), ainsi que le signal (s) dudit résolveur (17), et, d'autre part, est susceptible de corriger la commande de ladite vanne (4) par ladite manette (5) pour tenir compte desdits paramètres ;

— un dispositif électronique (13) d'ajustement de poussée recevant au moins certains desdits paramètres (10, 11) et le signal (s) du résolveur (17), et délivrant un signal représentatif d'une poussée de consigne ; et

— des moyens de commutation (20, 21) permettant de commander ladite vanne pilotée (4) :

— soit par actionnement manuel volontaire de ladite manette (5) ;

— soit, pour au moins le vol de croisière de l'aéronef, automatiquement par l'intermédiaire dudit dispositif électronique (13) d'ajustement de poussée, caractérisé en ce que :

— ledit dispositif de correction (23) est entièrement électrique et commande ladite vanne (4) par l'intermédiaire de son signal de sortie (S) ;

— la connexion électrique (18) entre ledit résolveur (17) et ledit dispositif de correction (23) est l'unique liaison entre ladite manette (5) et ledit dispositif de correction (23) ;

— ledit dispositif de correction (23) comporte :

— des premiers moyens pour allouer au signal (s) dudit résolveur (17) une pluralité de plages consécutives de valeurs (sI, sII, sIII, sIV et sV) ;

— des seconds moyens pour transformer chacune desdites plages de valeurs (sI à sV) du signal (s) du résolveur (17) en une plage de valeurs élémentaire (SI, SII, SIII, SIV ou SV respectivement) pour le signal de commande de vanne, plage de valeurs élémentaire qui est caractéristique d'une phase de pilotage dudit aéronef et dont les extrémités (62 et 63, 63 et 64 ; 64 et 65, 65 et 66, 66 et 67), sauf éventuellement pour celle (SIV) de ces plages de valeurs élémentaires qui correspond au ralenti du moteur (2), constituent l'une la valeur maximale et l'autre la valeur minimale dudit signal de commande de vanne correspondant, de sorte,

— d'une part, est établie une loi (61) qui, à chaque position de la manette (5), fait correspondre une poussée (P) pour le moteur (2) ; et

— d'autre part, la course (F-R) de ladite manette (5) est subdivisée en une pluralité de zones consécutives (I à V) dont chacune d'elles est associée à une phase de pilotage et correspond à une plage de poussée (PM-PA, PA-PB, PB-PC, PC-PD, PD-PR) pour ledit moteur (2), les extrémités (F, A, B, C, D et R) de chaque zone correspondant l'une à la valeur maximale et l'autre à la valeur minimale de la poussée (P) dans la plage correspondante ; et

— des troisièmes moyens, qui, lorsque le dispositif électronique d'ajustement de poussée (13) est hors circuit par action desdits moyens de commutation (20, 21), font varier automatiquement, lorsque ladite manette (5) se trouve à l'intérieur d'une telle zone (I à V) et en fonction desdits paramètres (10, 11), la poussée (P) à l'intérieur de la plage correspondante, la variation de poussée s'effectuant, à partir de la valeur (Px) correspondant à la position (x) de la manette (5), aussi bien vers la valeur maximale que vers la valeur minimale de ladite plage de façon à maintenir la poussée (P) à ladite valeur Px, lesdites valeurs maximale et minimale constituant alors des limites infranchissables.

2. Système selon la revendication 1, caractérisé en ce que ledit dispositif de correction (23) comporte un calculateur électronique.

3. Système selon l'une des revendications 1 ou 2, caractérisé en ce que ledit dispositif électronique d'ajustement de poussée (13) comporte un calculateur électronique.

4. Système selon la revendication 2, caractérisé en ce que lesdits premiers, seconds et troisièmes moyens sont formés par des circuits faisant partie intégrante dudit calculateur électronique.

5. Système selon la revendication 2, caractérisé en ce que lesdits premiers et seconds moyens constituent un circuit d'entrée (70) pour ledit calculateur électronique (23) qui incorpore lesdits troisièmes moyens.

6. Système selon la revendication 5, caractérisé en ce que lesdits premiers moyens sont formés par des circuits à seuils (71 à 76), en ce que lesdits seconds moyens sont constitués par des circuits de transfert (81 à 86), et en ce que chaque paire d'un circuit à seuils et d'un circuit de transfert correspond à une plage de valeurs (sI à sV) du signal (s) du résolveur (17).

7. Système selon l'une quelconque des revendications 1 à 6, caractérisé en ce que, à la manette (5), est associé un dispositif mécanique (42 à 43) permettant de marquer le passage (A, B, C, D) de ladite manette (5) d'une zone (I, II, III, IV, V) à l'autre.

8. Système selon l'une quelconque des revendications 1 à 7, caractérisé en ce que la loi (61), qui, à chaque position de la manette (5) fait correspondre une poussée pour le moteur (2), est constituée de portions rectilignes (SI à SV).

9. Système selon l'une quelconque des revendications 1 à 8, caractérisé en ce que la loi (61), qui, à chaque position de la manette (5), fait correspondre une poussée pour le moteur (2), comporte au moins, lorsque la manette (5) se déplace depuis la position (F) correspondent à la poussée maximale (PM) jusqu'à la position (C) correspondant à la poussée minimale de ralenti (Pm), au moins deux portions (SI-SII et SIII) différentes, dont l'une correspond a une plage de poussée (PM-PB) destinée au décollage et l'autre à une plage de poussée (PB-PC) destinée au vol de croisière.

10. Système selon la revendication 9, caractérisé en ce que ladite portion (SI-SII) correspondant au décollage concerne les poussées les plus élevées et présente une pente inférieure à celle de la portion (SIII) relative au vol de croisière.

11. Système selon l'une des revendications 9 ou 10, caractérisé en ce que ladite portion (SI-SII) correspondant au décollage est subdivisée en deux plages de poussée distinctes, dont l'une (SI) supérieure correspond au décollage à pleine charge et l'autre (SII) au décollage à charge réduite et aux poussées maximales susceptibles d'être exercées en continu.

12. Système selon l'une quelconque des revendications 1 à 11, dans lequel un inverseur de poussée (25) est associé audit moteur (2), caractérisé en ce que la loi (61), qui, à chaque position de la manette (5), fait correspondre une poussée pour le moteur (2), comporte une portion (SV) qui est spécifique au soufflage dudit inverseur en position active.

13. Système selon la revendication 12, caractérisé en ce que ladite portion (SV) d'inversion de poussée est disposée, par rapport à la poussée (Pm) correspondant au ralenti du moteur (2), du côté opposé auxdites portions (SI-SII et SIII) correspondant au décollage et au vol de croisière et en ce que sa pente est de signe opposé à celles de ces dernières portions.

14. Système selon la revendication 13, caractérisé en ce que ladite loi (61), qui, a chaque position de la manette (5) fait correspondre une poussée pour le moteur (2), comporte une portion (SIV) correspondant au ralenti dudit moteur, et en ce que le passage (E) en inversion de poussée s'effectue à l'intérieur de ladite portion de ralenti (SIV).

15. Système selon l'une quelconque des revendications 12 à 14, caractérisé en ce que, à ladite manette (5), est associée une butée escamotable (53), sur laquelle il est nécessaire d'agir de façon volontaire pour pouvoir franchir ladite portion de ralenti (en E) en direction de ladite portion d'inversion de poussée (SV).

16. Système selon l'une quelconque des revendications 1 à 15, dans lequel l'un des paramètres externes au moteur (2) pris en compte est la température ambiante au sol, caractérisé en ce qu'il comporte des moyens de réglage (89) permettant de modifier ledit paramètre de température ambiante pour ajuster la poussée du moteur (2) en cas de décollage a charge réduite.

**Claims**

1. System for supplying fuel to an aircraft engine (2), of the type comprising :
— a controlled valve (4), controlling the flow rate of fuel admitted into said engine (2) ;
— a throttle lever (5), mobile in two opposite directions in a stroke defined by two end positions (F and R), said lever being associated with a resolver (17) capable of delivering a continuous signal (60) indicative of the position of said lever ;
— a transmission arranged between said throttle lever (5) and said controlled valve (4), to cause one position of said valve to correspond to one position of said lever, said transmission comprising a correction device (23) which, on the one hand, receives a plurality of parameters concerning both the operation of the engine (2) and the environment of said aircraft (by lines 10 and 11), as well as the signal (s) from the resolver (17), and, on the other hand, is capable of correcting the control of said valve (4) by said lever (5) to take into account said parameters ;

— an electronic thrust-adjusting device (13) receiving at least certain of said parameters (10, 11) and the signal (s) from the resolver (17), and delivering a signal indicative of a reference thrust ; and

— switching means (20, 21) enabling said controlled valve (4) to be controlled :

either by voluntary manual actuation of said throttle lever (5), or, at least at cruising speed of the aircraft, automatically via said electronic thrust-adjusting device (13), characterized in that :

— said correction device (23) is entirely electrical and controls said valve (4) via its output signal (S) ;

— the electrical connection (18) between said resolver (17) and said correction device (23) is the sole link between said throttle lever (5) and said correction device (23) ;

— said correction device (23) comprises :

first means for subdividing the signal (s) from said resolver (17) into a plurality of consecutive portions of values (sI, sII, sIII, sIV and sV) ;

second means for converting each of said portions of values (sI to sV) of signal (s) from the resolver (17) into an elementary portion of values (SI, SII, SIII, SIV or SV respectively) for the valve-control signal, elementary portion of values which is characteristic of a control phase of said aircraft and whose ends (62 and 63, 63 and 64, 64 and 65, 65 and 66, 66 and 67), except possibly for that (SIV) of said elementary portions of values which corresponds to idling of the engine (2), constitute, one, the maximum value and the other, the minimum value of said corresponding valve-control signal, with the result that,

— on the one hand, there is established a law (61) which ensures that a thrust (P) for the motor (2) corresponds to each position of the throttle lever (5), and

— on the other hand, the stroke (F-R) of said throttle lever (5) is subdivided into a plurality of consecutive zones (I to V) of which each is associated with a control phase, and corresponds to a thrust range (PM-PA, PA-PB, PB-PC, PC-PD, PD-PR) for said engine (2), the ends (F, A, B, C, D and R) of each zone corresponding, one, to the maximum value and the other, to the minium value of the thrust (P) in the corresponding range ; and

third means which, when the electronic thrustadjusting device (13) is switched off by action of said switching means (20, 21), and when said throttle lever (5) lies within such a zone (I to V) and as a function of said parameters (10, 11), automatically cause the thrust (P) to vary within the corresponding range, the variation in thrust being effected, from the value (Px) corresponding to the position (x) of the throttle lever (5), both towards said maximum value and towards the minimum value of said range in order to maintain thrust (P) at said value (Px), said maximum and minimum values constituting limits not to be overstepped.

2. System according to claim 1, characterized in that said correction device (23) comprises an electronic computer.

3. System according to one of claims 1 or 2, characterized in that said electronic thrust-adjusting device (13) comprises an electronic computer.

4. System according to claim 2, characterized in that said first, second and third means are formed by circuits forming an integral part of said electronic computer.

5. System according to claim 2, characterized in that said first and second means constitute an input circuit (70) for said electronic computer (23) which incorporates said third means.

6. System according to claim 5, characterized in that said first means are formed by threshold circuits (71 to 76), in that said second means are constituted by transfer circuits (81 to 86) ; and in that each pair of a threshold circuit and a transfer circuit corresponds to a portion of values (sI to sV) of the signal (s) from the resolver (17).

7. System according to any one of claims 1 to 6, characterized in that there is associated with the throttle lever (5) a mechanical device (42 to 48) for marking the passage (A, B, C, D) of said lever (5) from one zone (I, II, III, IV, V) to the other.

8. System according to any one of claims 1 to 7, characterized in that the law (61) whereby a thrust for the engine (2) corresponds to each position of the throttle lever (5), is constituted by rectilinear portions (SI to SV).

9. System according to any one of claims 1 to 8, characterized in that the law (61) whereby a thrust for the engine (2) corresponds to each position of the throttle lever (5), comprises, when the lever (5) moves from the position (F) corresponding to maximum thrust (PM) to the position (C) corresponding to minimum idling thrust (Pm), at least two different portions (SI-SII and SIII) of which one corresponds to a thrust range (PM-PB) intended for take-off and the other to a thrust range (PB-PC) intended for cruising speed.

10. System according to claim 9, characterized in that said portion (SI-SII) corresponding to take-off concerns the highest thrusts and presents a gradient less than that of the portion (SIII) relative to the cruising speed.

11. System according to one of claims 9 or 10, characterized in that said portion (SI-SII) corresponding to take-off is subdivided into two distinct thrust ranges, of which the higher one (SI) corresponds to take-off under full load and the other (SIII) to take-off under reduced load and to the maximum thrusts capable of being exerted continuously.

12. System according to any one of claims 1 to 11 in which a thrust reverser (25) is associated with said engine (2), characterized in that the law (61) whereby a thrust for the engine (2) corresponds to each position of the throttle lever (5), comprises a portion (SV) which is specific to the blowing of said reverser in active position.

13. System according to claim 12, characterized in that said thrust reversal portion (SV) is disposed, with respect to the thrust (Pm) corresponding to idling of the engine (2), on the side opposite said portions (SI, SII and SIII) corresponding to take-off and to cruising speed, and in that its gradient is of sign opposite those of these latter portions.

14. System according to claim 13, characterized in that said law (61) whereby a thrust for the engine (2) corresponds to each position of the throttle lever (5), comprises a portion (SIV) corresponding to idling of said engine, and in that the passage (E) to thrust reversal is effected within said idling portion (SIV).

15. System according to any one of claims 12 to 14, characterized in that there is associated with said throttle lever (5) a retractable stop (53) on which it is necessary to act voluntarily in order to be able to overstep said idling portion (at E) in the direction of said thrust reversal portion (SV).

16. System according to any one of claims 1 to 15, in which one of the parameters external to the engine (2) taken into account is the ambient temperature on the ground, characterized in that it comprises adjusting means (89) for modifying said ambient temperature parameter in order to adjust the thrust of the engine (2) in the case of take-off under reduced load.

**Patentansprüche**

1. Regelsystem für die Kraftstoffzufuhr eines Flugzeugmotors, das umfaßt :
— ein gesteuertes Ventil (4), das den Durchsatz des dem Motor (2) zugeführten Kraftstoffs bestimmt ;
— einen Handhebel (5), der in zwei entgegengesetzten Richtungen innerhalb eines durch zwei Endpositionen (F und R) begrenzten Stellungsbereichs beweglich ist, wobei dieser Handhebel mit einem Resolver (17) verbunden ist, welcher ein die Winkelstellung des Handhebels darstellendes kontinuierliches Signal (s) abgibt ;
— eine Fernwirkeinrichtung, die zwischen dem Handhebel (5) und dem gesteuerten Ventil (4) eingeschaltet ist, um eine Stellung des Ventils einer Stellung des Handhebels zuzuordnen, wobei diese Fernwirkeinrichtung eine Korrekturvorrichtung (23) aufweist, der einerseits eine Vielzahl von die Funktion des Motors (2) und die Umgebung des Flugzeugs betreffenden Parametern (durch die Leitungen 10 und 11) sowie das Signal (s) des Resolvers (17) zugeführt werden und die andererseits die Steuerung des Ventils (4) mittels des Handhebels (5) unter rechnerischer Berücksichtigung dieser Parameter korrigiert, ;

— eine elektronische Vorrichtung (13) zur Schubregelung, der wenigstens einige der Parameter (10, 11) und das Signal (s) des Resolvers (17) zugeführt werden und die ein Signal abgibt, das einem vorschriftsmäßigen Schub entspricht ; und
— Schaltvorrichtungen (20, 21) zur Steuerung des Ventils (4) : .
— sei es durch frei wählbare Betätigung des Handhebels (5) ;
— sei es, zumindest beim Langstreckenflug des Flugzeugs, automatisch unter Einschaltung der elektronischen Vorrichtung (13) zur Schubregelung, dadurch gekennzeichnet,
— daß die Korrekturvorrichtung (23) vollkommen elektrisch ist und mittels ihres Ausgangssignals (S) das Ventil (4) steuert ;
— daß die elektrische Verbindung (18) zwischen dem Resolver (17) und der Korrekturvorrichtung (23) die einzige Verbindung zwischen dem Handhebel (5) und der Korrekturvorrichtung (23) ist ;
— und daß die Korrekturvorrichtung (23) umfaßt :
— erste Mittel um den Werten des Signals (s) des Resolvers (17) mehrere aufeinanderfolgende Bereiche (sI, sII, sIII, sIV und sV) zuzuweisen ;
— zweite Mittel, um jeden dieser Bereiche (sI bis sV) des Signals (s) des Resolvers (17) in einen Elementarbereich (SI, SII, SIII, SIV oder SV) des Wertes des Steuersignals (S) für das Ventil umzuformen, Elementarbereiche, die charakterisiert sind durch je eine Steuerungsphase des Flugzeugs und deren Endwerte (62 und 63, 63 und 64, 64 und 65, 65 und 66, 66 und 67), außer möglicherweise für den Elementarbereich (SIV), der einer Drehzahlabsenkung des Motors (2) entspricht, den in der betreffenden Steuerungsphase möglichen maximalen und minimalen Wert des Steuersignals für das Ventil darstellen, derart, daß
— einerseits eine Funktionskennlinie (61) besteht, die jeder Stellung des Handhebels (5) einen Schubwert (P) des Motors (2) zuordnet ; und
— andererseits der Stellungsbereich (F-R) des Handhebels in eine Mehrzahl aufeinanderfolgender Zonen (I bis V) eingeteilt ist, deren jede einer Steuerungsphase zugeordnet ist und einem Schubbereich (PM-PA, PA-PB, PB-PC, PC-PD, PD-PR) des Motors (2) entspricht, wobei die Endwerte (F, A, B, C, D und R) jeder Zone dem Maximalwert bzw. dem Minimalwert des Schubes (P) in dem entsprechenden Bereich entspricht ; und
— dritte Mittel, die, solange die elektronische Vorrichtung zur Schubregelung (13) infolge Betätigung der Schaltvorrichtungen (20, 21) außer Betrieb ist, automatisch den Schub (P) in Abhängigkeit von den Parametern (10, 11) innerhalb des entsprechenden Bereiches verändern, wenn sich der Handhebel (5) innerhalb einer solchen Zone (I bis V) befindet, wobei der Schub, ausgehend von einem einer Stellung (x) des Handhebels entsprechenden Wert (Px) sich sowohl zum Maximalwert als auch zum Minimalwert des betreffenden Bereichs hin ändern kann, um den Schub (P) auf dem Wert (Px) zu halten, wobei die maximalen und minimalen Werte jedoch unüberschreitbare Grenzen bilden.

2. System nach Anspruch 1, dadurch gekennzeichnet, daß die Korrekturvorrichtung (23) einen elektronischen Rechner enthält.

3. System nach einem der Ansprüche 1 oder 2, dadurch gekennzeichnet, daß die elektronische Vorrichtung zur Schubregelung (13) einen elektronischen Rechner enthält.

4. System nach Anspruch 2, dadurch gekennzeichnet, daß die ersten, zweiten und dritten Mittel durch Schaltanordnungen gebildet werden, die einen integrierenden Bestandteil des elektronischen Rechners bilden.

5. System nach Anspruch 2, dadurch gekennzeichnet, daß die ersten und zweiten Mittel einen Eingangsschaltkreis (70) des elektronischen Rechners (23) bilden, der die dritten Mittel inkorporiert.

6. System nach Anspruch 5, dadurch gekennzeichnet, daß die ersten Mittel durch Schwellenschaltkreise (71 bis 76) gebildet werden, daß die zweiten Mittel durch Übertragungsschaltkreise (81 bis 86) gebildet werden und daß jedes aus einem Schwellenschaltkreis und einem Übertragungsschaltkreis bestehende Paar einem Bereich des Werts (sI bis sV) des Signals (s) des Resolvers (17) entspricht.

7. System nach einem der Ansprüche 1 bis 6, dadurch gekennzeichnet, daß dem Handhebel (5) eine mechanische Vorrichtung (42 bis 48) zugeordnet ist, die den Übergang (A, B, C, D) des Handhebels (5) von einer Zone (I, II, III, IV, V) in eine andere erkennbar macht.

8. System nach einem der Ansprüche 1 bis 7, dadurch gekennzeichnet, daß die Funktionskennlinie (61), welche jeder Stellung des Handhebels (5) einen Schub des Motors (2) zuordnet, durch geradlinige Abschnitte (SI bis SV) gebildet wird.

9. System nach einem der Ansprüche 1 bis 8, dadurch gekennzeichnet, daß die Funktionskennlinie (61), welche jeder Stellung des Handhebels (5) einen Schub des Motors (2) zuordnet, wenn der Handhebel (5) von seiner dem maximalen Schub (PM) entsprechenden Stellung (F) in seine dem minimalen Leerlaufschub (Pm) entsprechende Stellung (C) zurückgestellt wird, wenigstens zwei verschiedene Abschnitte (SI-SII und SIII) aufweist, wobei der eine Schubbereich (PM-PB) für den Start und der andere Schubbereich (PB-PC) für den Langstreckenflug bestimmt ist.

10. System nach Anspruch 9, dadurch gekennzeichnet, daß der Bereich (SI-SII), der für den Start bestimmt ist, die höchsten Schübe beinhaltet und eine geringere Steigung hat als der Bereich SIII, der für den Langstreckenflug bestimmt ist.

11. System nach einem der Ansprüche 9 oder 10, dadurch gekennzeichnet, daß der Bereich (SI-SII), der für den Start bestimmt ist, in zwei bestimmte Schubbereiche geteilt ist, von denen der höhere (SI) für den Start mit Vollast und der andere SII für den Start mit verringerter Last bestimmt ist, wobei der letztere die Maximalschübe beinhaltet, mit denen im Dauerbetrieb geflogen werden kann.

12. System nach einem der Ansprüche 1 bis 11, bei welchem dem Motor (2) ein Schubumschalter (25) zugeordnet ist, dadurch gekennzeichnet, daß die Funktionskennlinie (61), welche jeder Stellung des Handhebels (5) einen Schub des Motors (2) zuordnet, einen Abschnitt (SV) aufweist, der speziell für das Anströmen des Umschalters in seiner aktiven Stellung bestimmt ist.

13. System nach Anspruch 12, dadurch gekennzeichnet, daß der Schubumkehrbereich (SV) bezüglich des Schubes (Pm), der dem Leerlauf des Motors (2) entspricht, an der den zum Start und Langstreckenflug bestimmten Bereichen gegenüberliegenden Seite angeordnet ist und daß seine Steigung das umgekehrte Vorzeichen wie die Steigung der letzteren Bereiche hat.

14. System nach Anspruch 13, dadurch gekennzeichnet, daß die Funktionskennlinie (61), welche jeder Stellung des Handhebels (5) einen Schub des Motors (2) zuordnet, einen Bereich (SIV) aufweist, der dem Leerlauf des Motors entspricht und daß der Übergang (E) zur Schubumkehr sich innerhalb dieses Leerlaufbereichs (SIV) vollzieht.

15. System nach einem der Ansprüche 12 bis 14, dadurch gekennzeichnet, daß dem Handhebel (5) ein verstellbarer Anschlag (53) zugeordnet ist, der notwendigerweise betätigt werden muß, um vom Leerlaufbereich (bei E) absichtlich in den Schubumkehrbereich (SV) übergehen zu können.

16. System nach einem der Ansprüche 1 bis 15, bei welchem einer der in Rechnung gestellten nicht motorinternen Parameter die Umgebungstemperatur am Boden ist, dadurch gekennzeichnet, daß es Regelungsmittel (89) aufweist, mit deren Hilfe dieser Umgebungstemperaturparameter modifiziert werden kann, um den Schub des Motors (2) den beim Start mit reduzierter Last gegebenen Verhältnissen anpassen zu können.

EP 0 198 751 B1

Fig.1

Fig.2

EP 0 198 751 B1

Fig. 3

## Fig. 4

## Fig. 5

Fig. 6